# EUROPEAN PATENT APPLICATION

(11) **EP 4 625 580 A1**
(43) Date of publication of application: **01.10.2025**
(21) Application number: 23935713.0
(22) Date of filing: 20.11.2023
(51) Int. Cl.: H01M 10/056, H01M 10/052

(54) **MODIFIED SOLID-STATE ELECTROLYTE AND PREPARATION METHOD THEREFOR, SOLID-STATE BATTERY, AND ELECTRIC DEVICE**

(30) Priority: 04.05.2023 CN 202310484801
(71) Applicant: Contemporary Amperex Technology Co., Limited, Ningde, Fujian 352100 (CN)
(72) Inventor: NING, Ziyang, Ningde, Fujian 352100 (CN); LIU, Chengyong, Ningde, Fujian 352100 (CN); HU, Bobing, Ningde, Fujian 352100 (CN); ZHONG, Chengbin, Ningde, Fujian 352100 (CN)
(74) Representative: Herrmann, Uwe
(86) International application number: PCT/CN2023/132662
(87) International publication number: WO 2024/227343

(57) **Abstract**

This application relates to a modified solid electrolyte, a preparation method thereof, a solid-state battery, and an electric apparatus. Components of the modified solid electrolyte include a solid electrolyte substrate and a phase-transforming toughening agent dispersed within the solid electrolyte substrate; and in the modified solid electrolyte, the phase-transforming toughening agent is primarily dispersed at grain boundaries of the solid electrolyte, where the phase-transforming toughening agent is capable of phase transformation under the action of an external force.

## Description

### CROSS-REFERENCE TO RELATED APPLICATIONS

This application is proposed based on Chinese Patent Application No. 202310484801.9, filed on May 4, 2023 and entitled "MODIFIED SOLID ELECTROLYTE, PREPARATION METHOD THEREOF, SOLID-STATE BATTERY, AND ELECTRIC APPARATUS", which is incorporated herein by reference in its entirety.

### TECHNICAL FIELD

This application relates to the field of battery technologies, and in particular to, a modified solid electrolyte, a preparation method thereof, a solid-state battery, and an electric apparatus.

### BACKGROUND

In recent years, solid-state batteries prepared using solid electrolytes have garnered increasing attention. They can avoid the flammability and explosiveness issues associated with liquid batteries containing organic electrolytes. Solid-state batteries can utilize metal as the negative electrode material, reducing the likelihood of side reactions at high temperatures, among other advantages. Therefore, safety is considered one of the most fundamental driving forces for the development of solid-state batteries. Additionally, solid electrolytes endow solid-state batteries with characteristics such as compact structure, adjustable scale, and high design flexibility, making them suitable for microelectronic devices as well as for power and energy storage applications.

Conventional solid electrolytes usually exhibit the brittleness of ceramics, presenting poor mechanical strength and a tendency to fracture. During use, they are prone to fracture, especially when paired with a lithium metal negative electrode. Lithium metal forms dendrites at the solid electrolyte interface, and the formation of these dendrites may crack or even penetrate the solid electrolyte, causing short circuits and failure of the solid-state battery. As a result, practical application demands cannot be met.

Therefore, conventional technologies still require improvement.

### SUMMARY

According to various embodiments of this application, this application provides a modified solid electrolyte, a preparation method thereof, a solid-state battery, and an electric apparatus, so as to enhance the toughness of a solid electrolyte and thereby improve the efficiency of a solid-state battery.

This application is implemented using the following technical solutions.

A first aspect of this application provides a modified solid electrolyte, where the modified solid electrolyte includes a solid electrolyte substrate and a phase-transforming toughening agent dispersed within the solid electrolyte substrate; and in the modified solid electrolyte, the phase-transforming toughening agent is primarily dispersed at grain boundaries of the solid electrolyte, where
the phase-transforming toughening agent is capable of phase transformation under the action of an external force.

This modified solid electrolyte includes the solid electrolyte substrate and the phase-transforming toughening agent dispersed within the solid electrolyte substrate. When subjected to an external force, the phase-transforming toughening agent produces internal stress correspondingly. Under the stimulation of this stress, a phase transformation takes place in the phase-transforming toughening agent. The stress transition caused by this phase transformation process can improve the mechanical strength and toughness of the solid electrolyte substrate. Furthermore, the phase-transforming toughening agent is primarily dispersed along the grain boundaries of the modified solid electrolyte, and the grain boundaries are defect regions most susceptible to fracture when the solid electrolyte is subjected to external stress, as well as the regions where dendrites are most likely to grow and propagate. Therefore, this modified solid electrolyte can precisely prevent the emergence of defects inside the solid electrolyte, further improving the toughness.

In some embodiments, among the total number of particles of the phase-transforming toughening agent in the modified solid electrolyte, a proportion of particles of the phase-transforming toughening agent dispersed at grain boundaries of the solid electrolyte is ≥ 50%.

In some embodiments, in a cross-section of the modified solid electrolyte, the total number of particles of the phase-transforming toughening agent is N1, the number of particles of the phase-transforming toughening agent dispersed at the grain boundaries within the cross-section is N2, and then an orientation degree A of the phase-transforming toughening agent along the grain boundaries is A = N2/N1 × 100%, where A satisfies: A ≥ 50%;
optionally, A satisfies: 50% < A ≤ 100%; or
optionally, A satisfies: 50% <A < 100%.

In this modified solid electrolyte, when the orientation degree A of the phase-transforming toughening agent along the grain boundaries in a cross-section is ≥ 50%, it can be considered that the phase-transforming toughening agent is primarily dispersed along the grain boundaries in the modified solid electrolyte. Grain boundaries are the defect regions most susceptible to fracture when the solid electrolyte is subjected to external stress, as well as the regions where dendrites are most likely to grow and propagate. Therefore, that the phase-transforming toughening agent is primarily dispersed along the grain boundaries of the modified solid electrolyte can more precisely prevent the emergence of defects inside the solid electrolyte, further improving the toughness.

In some embodiments, the cross-section is a transverse cross-section or a longitudinal cross-section of the modified solid electrolyte.

Specifically, the transverse cross-section is a cross-section formed by cutting along a direction perpendicular to a height or thickness direction, while the longitudinal cross-section is a cross-section formed by cutting along a direction parallel to the height or thickness direction. Taking a cylinder as an example, its transverse cross-section is a cross-section formed by cutting along a direction perpendicular to its height direction, which is a circle, and its longitudinal cross-section is a cross-section formed by cutting along a direction parallel to its height direction, which is a rectangle. The height of a cylinder may also be referred to as its thickness. If the height of the cylinder is relatively low, for example, less than the diameter of its base, the cylinder becomes a disc, and in such cases, the height is commonly referred to as thickness.

In some embodiments, steps for testing the orientation degree A include:
taking a test sample of the modified solid electrolyte, and cutting the test sample along a direction perpendicular to a thickness direction of the test sample, where a cutting cross-section formed by cutting the test sample is a transverse cross-section to be tested;
using an X-ray energy dispersive spectrometer to identify a key element contained in the phase-transforming toughening agent in the transverse cross-section to be tested so as to cause the key element to emit signal points, and obtaining a scanning electron microscope image of the transverse cross-section to be tested;
obtaining the total number M1 of signal points in the scanning electron microscope image and the number M2 of signal points contained at the grain boundaries in the scanning electron microscope image; and
calculating A based on M1 and M2; where
specifically, A = M2/M1 × 100%; and
the key element is an element contained in the phase-transforming toughening agent but not contained in the solid electrolyte substrate.

In some embodiments, the phase-transforming toughening agent contains zirconium oxide, and the key element is zirconium.

In some embodiments, the phase-transforming toughening agent further contains a stabilizer, where a mass proportion of the stabilizer in the phase-transforming toughening agent is 0.01% to 50%;
optionally, the stabilizer contains at least one element of yttrium, scandium, magnesium, calcium, and cesium; or
optionally, the stabilizer includes at least one of yttrium oxide, scandium oxide, magnesium oxide, calcium oxide, and cesium oxide; or
optionally, the stabilizer includes yttrium oxide.

Although the specific toughening mechanism of the phase-transforming toughening agent remains to be studied, technicians speculate as follows: the phase-transforming toughening agent possesses a metastable state, meaning that it exists at room temperature in a crystal structure stable at high temperatures. In this case, a phase transformation takes place in the phase-transforming toughening material when it is stimulated by an external force, resulting in volume changes. This suppresses the fracture of the solid electrolyte, thereby achieving phase-transformation toughening. For example, pure ZrO₂ generally undergoes the following phase transformations when cooled from a high temperature to room temperature: cubic phase (c), tetragonal phase (t), then to monoclinic phase (m), where the t-m phase transformation takes place at around 1150°C accompanied by approximately 5% of volume change. If the t-m phase transformation point of ZrO₂ is stabilized at the room temperature so that the t-m phase transformation can be induced under external stress at room temperature, the volume effect produced by the phase transformation absorbs a significant amount of fracture energy, resulting in exceptionally high fracture toughness and achieving the effect of phase-transformation toughening.

In some embodiments, in the modified solid electrolyte, a mass proportion of the phase-transforming toughening agent is 2% to 25%;
optionally, the mass proportion of the phase-transforming toughening agent is 5% to 25%;
optionally, the mass proportion of the phase-transforming toughening agent is 10% to 25%; or
optionally, the mass proportion of the phase-transforming toughening agent is 15% to 25%.

The mass proportion of the phase-transforming toughening agent is adjusted to further enhance the toughness of the modified solid electrolyte.

In some embodiments, in the modified solid electrolyte, mass of the solid electrolyte substrate is m1 with a theoretical density of ρ1, and mass of the phase-transforming toughening agent is m2 with a theoretical density of ρ2, and then a theoretical volume Vt of the modified solid electrolyte satisfies: Vt = [m1/ρ1] + [m2/ρ2]; and
an actual volume of the modified solid electrolyte is Vr, and then density K of the modified solid electrolyte is K = Vt/Vr × 100%; where
optionally, K satisfies: K ≥ 70%; or optionally, K satisfies: 90% ≤ K ≤ 100%.

It can be understood that the theoretical densities ρ1 and ρ2 are the densities of the pure solid electrolyte substrate and the pure phase-transforming toughening agent respectively, and can also be understood as the densities of the raw materials of the solid electrolyte substrate and the phase-transforming toughening agent used during preparation. Vt represents the volume of the modified solid electrolyte. A greater K value indicates a greater difference between the actual volume and the theoretical volume, meaning that the internal distribution of the actual modified solid electrolyte is more compact. The high density of this modified solid electrolyte can reduce defects and pores on the surface of the electrolyte sheet/film of solid-state batteries, further improving the ionic conductivity of the modified solid electrolyte.

In some embodiments, the solid electrolyte substrate includes any one of a lithium-ion solid electrolyte, a sodium-ion solid electrolyte, and a potassium-ion solid electrolyte.

A second aspect of this application provides a preparation method for a modified solid electrolyte, including the following steps:
mixing a solid electrolyte substrate and a phase-transforming toughening agent to prepare a mixture;
   and
subjecting the mixture to sintering treatment under a protective gas atmosphere to prepare the modified solid electrolyte.

In this preparation method, during the sintering of the mixture, grains grow and grain boundaries fuse with each other. In addition, the phase-transforming toughening agent, which initially tends to be uniformly dispersed in the mixture, is driven by grain growth and the vast majority of the phase-transforming toughening agent enters the grain boundaries and becomes oriented along the grain boundaries.

Furthermore, due to grain growth and grain boundary fusion, defects and pores in the modified solid electrolyte are significantly reduced, and therefore the density is increased.

In some embodiments, the sintering treatment satisfies at least one of the following conditions (1) and (2).
(1) A temperature for the sintering treatment is 90°C to 600°C, and a duration is 10 minutes to 120 hours.
   The temperature and duration of the sintering treatment are adjusted to further promote the movement of the vast majority of the phase-transforming toughening agent into the grain boundaries under the driving force of grain growth, while ensuring the structural stability of the solid electrolyte substrate and the phase-transforming toughening agent.
(2) The protective gas atmosphere is formed by introducing a protective gas, where the protective gas includes at least one of an inert gas and nitrogen;
   optionally, the protective gas includes helium; or
   optionally, a water content of the protective gas is < 0.1 ppm, and an oxygen content is < 0.1 ppm.

In some embodiments, after the sintering treatment, the method further includes a step of pressing a product obtained from the sintering treatment; where
optionally, pressure T1 used in the pressing step satisfies: T1 ≤ 400 MPa; or
optionally, T1 satisfies: 400 MPa ≤ T1 ≤ 600 MPa.

In some embodiments, the mixing step employs dry mixing, and before the subjecting the mixture to sintering treatment, the method further includes the following step:
pressing the mixture into a sheet-like mixture; where optionally, a thickness of the sheet-like mixture is 200 µm to 2 mm; and optionally, a pressure used for pressing the mixture into a sheet-like mixture is 400 to 600 MPa; or
the mixing step employs wet mixing, and before the subjecting the mixture to sintering treatment, the method further includes the following step:
   applying and drying the mixture to form a film-like mixture; where optionally, a thickness of the film-like mixture is 10 µm to 200 µm.

A third aspect of this application provides a solid-state battery, where the solid-state battery includes the modified solid electrolyte according to the first aspect or a modified solid electrolyte prepared using the preparation method according to the second aspect.

A fourth aspect of this application provides an electric apparatus, where the electric apparatus includes the solid-state battery according to the third aspect.

### BRIEF DESCRIPTION OF DRAWINGS

To more clearly illustrate the technical solutions of the embodiments of this application, the drawings required for use in the embodiments of this application are briefly introduced below. It is apparent that the drawings described below are merely some embodiments of this application, and those of ordinary skill in the art can obtain other drawings based on these drawings without creative effort. In the drawings:
FIG. 1 is a schematic diagram of a solid-state battery according to an embodiment;
FIG. 2 is a schematic diagram of a battery pack according to an embodiment;
FIG. 3 is an exploded view of FIG. 2;
FIG. 4 is a schematic diagram of an electric apparatus using a solid-state battery as a power source according to an embodiment; and
FIG. 5 is an electron microscope image of a transverse cross-section of the modified solid electrolyte prepared in Example 1.

### Reference signs:

1. battery pack; 2. upper case; 3. lower case; 4. solid-state battery; and 5. electric apparatus.

### DESCRIPTION OF EMBODIMENTS

To make the above objectives, features, and advantages of this application more apparent and understandable, the specific embodiments of this application are described in detail below. Numerous specific details are set forth in the following description to facilitate a full understanding of this application. However, this application can be implemented in many ways other than those described herein, and those skilled in the art can make similar improvements without departing from the scope of this application. Therefore, this application is not limited by the specific embodiments disclosed below.

In this application, unless otherwise expressly specified and defined, terms such as "mounting", "connection", "join", and "fastening" should be understood in a broad sense. For example, it may refer to a fixed connection, a detachable connection, or an integral formation; it may be a mechanical connection or an electrical connection; it may be a direct connection or an indirect connection via an intermediate medium; it may refer to internal communication between two elements or an interaction relationship between two elements, unless explicitly defined otherwise. For those of ordinary skill in the art, the specific meanings of the above terms in this application can be understood based on specific circumstances.

Furthermore, the terms "first" and "second" are used for descriptive purposes only and should not be construed as indicating or implying relative importance or implicitly specifying the number of technical features indicated. Therefore, a feature defined with "first" or "second" may explicitly or implicitly include at least one such feature. In the description of this application, "multiple" means at least two, such as two and three, unless explicitly and specifically defined otherwise.

Unless otherwise defined, all technical and scientific terms used herein have the same meanings as commonly understood by those skilled in the technical field of this application. The terms used herein in the specification of this application are solely for the purpose of describing specific embodiments and are not intended to limit this application. The term "and/or" as used herein includes any and all combinations of one or more related listed items.

As summarized in the background, conventional solid electrolytes usually exhibit the brittleness of ceramics. In conventional technologies, technicians have primarily focused on developing new solid electrolytes or improving the structure of solid-state batteries, but no significant breakthroughs or progress have been achieved to date.

The inventors of this application have found through research that in a solid electrolyte, the contact interface formed when crystals with different orientations come into contact is a grain boundary, which is the defect region most susceptible to fracture when the solid electrolyte is subjected to external stress, and it is also the region where dendrites are most likely to grow and propagate.

Based on this, after extensive creative exploration, the inventors of this application developed a modified solid electrolyte with excellent toughness as described herein.

An embodiment of this application provides a modified solid electrolyte, where the modified solid electrolyte includes a solid electrolyte substrate and a phase-transforming toughening agent dispersed within the solid electrolyte substrate, and in the modified solid electrolyte, the phase-transforming toughening agent is primarily dispersed at grain boundaries of the modified solid electrolyte.

The phase-transforming toughening agent is capable of phase transformation under the action of an external force.

This modified solid electrolyte includes the solid electrolyte substrate and the phase-transforming toughening agent dispersed within the solid electrolyte substrate. When subjected to an external force, the phase-transforming toughening agent produces internal stress correspondingly. Under the stimulation of this stress, a phase transformation takes place in the phase-transforming toughening agent. The stress transition caused by this phase transformation process can improve the mechanical strength and toughness of the solid electrolyte substrate. Furthermore, the phase-transforming toughening agent is primarily dispersed along the grain boundaries of the modified solid electrolyte, and the grain boundaries are defect regions most susceptible to fracture when the solid electrolyte is subjected to external stress, as well as the regions where dendrites are most likely to grow and propagate. Therefore, this modified solid electrolyte can precisely prevent the emergence of defects inside the solid electrolyte, further improving the toughness.

It can be understood that the external force in the statement "the phase-transforming toughening agent is capable of phase transformation under the action of an external force" refers to a force applied to the phase-transforming toughening agent by the external environment. Furthermore, when an external force acts on the phase-transforming toughening agent, the phase-transforming toughening agent is deformed, generating an internal force exerted between various parts of the phase-transforming toughening agent to resist the external force and attempt to restore the position of the phase-transforming toughening agent to that before the deformation. This internal force is referred to as stress, and under the action of this stress, a phase transformation takes place within the phase-transforming toughening agent. The volume change caused by this phase transformation absorbs a significant amount of fracture energy, thereby achieving the effect of phase-transformation toughening.

It can be understood that grain boundaries are interfaces between grains with the same structure but different orientations. At a grain boundary, the atomic arrangement transitions from one orientation to another, so the atomic arrangement at the grain boundary is in a transitional state. When observed under the bright field of a scanning electron microscope (SEM), the grain boundaries appear dark or black.

In some embodiments, among the total number of particles of the phase-transforming toughening agent in the modified solid electrolyte, a proportion of particles of the phase-transforming toughening agent dispersed at grain boundaries of the solid electrolyte is ≥ 50%.

In some embodiments, in a cross-section of the modified solid electrolyte, the total number of particles of the phase-transforming toughening agent is N1, the number of particles of the phase-transforming toughening agent dispersed at the grain boundaries within the cross-section is N2, and then an orientation degree A of the phase-transforming toughening agent along the grain boundaries is A = N2/N1 × 100%, where A satisfies: A ≥ 50%;
optionally, A satisfies: 50% < A ≤ 100%; or
optionally, A satisfies: 50% < A < 100%.

In this modified solid electrolyte, when the orientation degree A of the phase-transforming toughening agent along the grain boundaries in a cross-section is ≥ 50%, it can be considered that the phase-transforming toughening agent is primarily dispersed along the grain boundaries in the modified solid electrolyte. Grain boundaries are the defect regions most susceptible to fracture when the solid electrolyte is subjected to external stress, as well as the regions where dendrites are most likely to grow and propagate. Therefore, that the phase-transforming toughening agent is primarily dispersed along the grain boundaries of the modified solid electrolyte can more precisely prevent the emergence of defects inside the solid electrolyte, further improving the toughness.

It can be understood that the distribution of the phase-transforming toughening agent in a plane can reflect the overall distribution of the phase-transforming toughening agent in the modified solid electrolyte.

Regarding "50% < A ≤ 100%", the value of A includes the minimum and maximum values of this range, as well as every value between the minimum and maximum values. A specific example includes, but is not limited to, a point value in the embodiments and the following point values: 51%, 55%, 60%, 65%, 70%, 75%, 80%, 85%, 90%, 95%, 99%, and 100%; or a range defined by any two values, which, for example, may be 51%-99%, 55%-99%, 60%-99%, 65%-99%, 70%-99%, 75%-99%, 80%-99%, 51%-95%, 55%-95%, 60%-95%, 65%-95%, 70%-95%, 75%-95%, 80%-95%, 51%-90%, 55%-90%, 60%-90%, 65%-90%, 70%-90%, 75%-90%, 80%-90%, 51%-85%, 55%-85%, 60%-85%, 65%-85%, 70%-85%, 75%-85%, 80%-85%, 51%-80%, 55%-80%, 60%-80%, 65%-80%, 70%-80%, 75%-80%, 51%-75%, 55%-75%, 60%-75%, 65%-75%, 70%-75%, 51%-70%, 55%-70%, 60%-70%, or 65%-70%.

In some embodiments, the cross-section is a transverse cross-section or a longitudinal cross-section of the modified solid electrolyte.

Specifically, the transverse cross-section is a cross-section formed by cutting along a direction perpendicular to a height or thickness direction, while the longitudinal cross-section is a cross-section formed by cutting along a direction parallel to the height or thickness direction. Taking a cylinder as an example, its transverse cross-section is a cross-section formed by cutting along a direction perpendicular to its height direction, which is a circle, and its longitudinal cross-section is a cross-section formed by cutting along a direction parallel to its height direction, which is a rectangle. The height of a cylinder may also be referred to as its thickness. If the height of the cylinder is relatively low, for example, less than the diameter of its base, the cylinder becomes a disc, and in such cases, the height is commonly referred to as thickness.

Optionally, the cross-section is a transverse cross-section of the modified solid electrolyte. Further optionally, the modified solid electrolyte is cylindrical.

In some embodiments, steps for testing the orientation degree A include:
taking a disc of the modified solid electrolyte, and cutting the disc along a direction perpendicular to a thickness direction of the disc, where a cutting cross-section formed by cutting the disc is a transverse cross-section to be tested;
using an X-ray energy dispersive spectrometer to identify a key element contained in the phase-transforming toughening agent in the transverse cross-section to be tested so as to cause the key element to emit signal points, and obtaining a scanning electron microscope image of the transverse cross-section to be tested;
obtaining the total number M1 of signal points in the scanning electron microscope image and the number M2 of signal points contained at the grain boundaries in the scanning electron microscope image; and
calculating A based on M1 and M2.

Specifically, A = M2/M1 × 100%.

It can be understood that the number of signal points emitted by the key element in the scanning electron microscope image is calculated and can be regarded as the total number of particles of the phase-transforming toughening agent in the transverse cross-section to be tested.

The number of signal points emitted by the key element at the grain boundaries in the scanning electron microscope image is calculated and can be regarded as the number N2 of particles of the phase-transforming toughening agent dispersed at the grain boundaries in the transverse cross-section to be tested.

Specifically, during scanning electron microscopy energy dispersive spectroscopy (SEM-EDS) analysis, the electron microscope is equipped with an EDS probe. For example, Zr is the key element. The Zr signal comes from the EDS probe of the SEM. It emits electrons to excite surface materials and then detects characteristic X-ray emissions. Therefore, the scanning electron microscope image is divided into 1 µm square grids, and the number of Zr element signal points output by EDS in each square grid is regarded as the number of particles of the phase-transforming toughening agent.

Specifically, EDS scanning is performed at an acceleration voltage of 10 kV, and the EDS probe is Oxford Instrument AZtechOne.

Optionally, the thickness of the disc is 200 µm to 2 mm.

In some embodiments, when the disc is cut along a direction perpendicular to its thickness direction, the cutting point is located at 1/2 of the disc's thickness.

In some embodiments, a magnification of the scanning electron microscope image is 1k to 5k.

In some embodiments, the area of the transverse cross-section to be tested is divided into n unit grid regions, where n is an integer ≥ 2. Each region is observed under a scanning electron microscope to form scanning electron microscope images, and then the total number of signal points emitted by the key element in the scanning electron microscope image of each grid region and the number of signal points emitted by the key element at the grain boundaries within each grid region are counted separately. The orientation degree An corresponding to each grid region is calculated, and the average value is taken as the orientation degree A of the transverse cross-section to be tested: $A = \left(A1+…+An\right) / n .$

In some embodiments, n satisfies: 3 ≤ n ≤ 10, where n is an integer.

In some embodiments, n is 5.

When n is 5, the five-point sampling method is used for grid division to obtain five grid units. Specifically, the midpoint of the diagonals is first determined as the central sampling grid, and then four grid units equidistant from the central sampling grid are selected on the diagonals.

Furthermore, during the step of observing the transverse cross-section to be tested under a scanning electron microscope, the placement position of the transverse cross-section to be tested can be changed multiple times, so as to obtain the orientation degrees of multiple regions of the transverse cross-section to be tested. An average value of the orientation degrees of these multiple regions is then calculated and regarded as the orientation degree of the phase-transforming toughening agent along the grain boundaries in the transverse cross-section to be tested.

In some embodiments, the phase-transforming toughening agent contains zirconium oxide, and the key element is zirconium.

In some embodiments, the phase-transforming toughening agent further contains a stabilizer, where a mass proportion of the stabilizer in the phase-transforming toughening agent is 0.1% to 50%; or
optionally, the stabilizer contains at least one element of yttrium, scandium, magnesium, calcium, and cesium.

In some embodiments, components of the stabilizer include oxides.

Optionally, the stabilizer includes at least one of yttrium oxide, scandium oxide, magnesium oxide, calcium oxide, and cesium oxide.

When the stabilizers are yttrium oxide, scandium oxide, magnesium oxide, calcium oxide, and cesium oxide respectively, the toughening agents are denoted as YSZ, SSZ, MSZ, CSZ, and CsSZ respectively.

Optionally, the stabilizer includes yttrium oxide.

Although the specific toughening mechanism of the phase-transforming toughening agent remains to be studied, technicians speculate as follows: the phase-transforming toughening agent possesses a metastable state, meaning that it exists at room temperature in a crystal structure stable at high temperatures. In this case, a phase transformation takes place in the phase-transforming toughening material when it is stimulated by an external force, resulting in volume changes. This suppresses the fracture of the solid electrolyte, thereby achieving phase-transformation toughening. For example, pure ZrO₂ generally undergoes the following phase transformations when cooled from a high temperature to room temperature: cubic phase (c), tetragonal phase (t), then to monoclinic phase (m), where the t-m phase transformation takes place at around 1150°C accompanied by approximately 5% of volume change. If the t-m phase transformation point of ZrO₂ is stabilized at the room temperature so that the t-m phase transformation can be induced under external stress at room temperature, the volume effect produced by the phase transformation absorbs a significant amount of fracture energy, resulting in exceptionally high fracture toughness and achieving the effect of phase-transformation toughening.

Regarding "0.01%-50%", the value includes the minimum and maximum values of this range, as well as every value between the minimum and maximum values. A specific example includes, but is not limited to, a point value in the embodiments and the following point values: 0.01%, 0.05%, 0.1%, 1%, 5%, 10%, 15%, 20%, 25%, 30%, 35%, 40%, 45%, and 50%; or a range defined by any two values, which, for example, may be 1%-50%, 5%-50%, 10%-50%, 15%-50%, 20%-50%, 25%-50%, 30%-50%, 35%-50%, 40%-50%, 45%-50%, 1%-45%, 5%-45%, 10%-45%, 15%-45%, 20%-45%, 25%-45%, 30%-45%, 35%-45%, 40%-45%, 1%-40%, 5%-40%, 10%-40%, 15%-40%, 20%-40%, 25%-40%, 30%-40%, 35%-40%, 1%-35%, 5%-35%, 10%-35%, 15%-35%, 20%-35%, 25%-35%, 30%-35%, 1%-30%, 5%-30%, 10%-30%, 15%-30%, 20%-30%, 1%-25%, 5%-25%, 10%-25%, 15%-25%, or 20%-25%.

In some embodiments, in the modified solid electrolyte, a mass proportion of the phase-transforming toughening agent is 2% to 25%.

In some embodiments, the mass proportion of the phase-transforming toughening agent is 5% to 25%.

In some embodiments, the mass proportion of the phase-transforming toughening agent is 10% to 25%.

In some embodiments, the mass proportion of the phase-transforming toughening agent is 15% to 25%.

The mass proportion of the phase-transforming toughening agent is adjusted to further enhance the toughness of the modified solid electrolyte.

Regarding "2%-25%", the value includes the minimum and maximum values of this range, as well as every value between the minimum and maximum values. A specific example includes, but is not limited to, a point value in the embodiments and the following point values: 2%, 5%, 10%, 15%, 20%, and 25%; or a range defined by any two values, which, for example, may be 2%-5%, 2%-10%, 2%-15%, 2%-20%, 2%-25%, 5%-10%, 5%-15%, 5%-20%, 5%-25%, 10%-15%, 10%-20%, 10%-25%, 15%-20%, 15%-25%, or 20%-25%.

In some embodiments, in the modified solid electrolyte, mass of the solid electrolyte substrate is M1 with a theoretical density of ρ1, mass of the phase-transforming toughening agent is M2 with a theoretical density of ρ2, and then a theoretical volume Vt of the modified solid electrolyte satisfies: Vt = [M1/ρ1] + [M2/ρ2]; and
an actual volume of the modified solid electrolyte is Vr, and then density K of the modified solid electrolyte is K = Vt/Vr × 100%; where
optionally, K satisfies: K ≥ 70%; or optionally, K satisfies: 90% ≤ K ≤ 100%.

It can be understood that the theoretical densities ρ1 and ρ2 are the densities of the pure solid electrolyte substrate and the pure phase-transforming toughening agent, respectively, and can also be understood as the densities of the raw materials of the solid electrolyte substrate and the phase-transforming toughening agent used during preparation. Vt represents the volume of the modified solid electrolyte. A greater K value indicates a greater difference between the actual volume and the theoretical volume, meaning that the internal distribution of the actual modified solid electrolyte is more compact. The high density of this modified solid electrolyte can reduce defects and pores on the surface of the electrolyte sheet/film of solid-state batteries, further improving the ionic conductivity of the modified solid electrolyte.

In some embodiments, the actual volume Vr of the modified solid electrolyte is measured using the Archimedes method or a micrometer on the actual modified solid electrolyte.

In some embodiments, the solid electrolyte substrate includes any one of a lithium-ion solid electrolyte, a sodium-ion solid electrolyte, and a potassium-ion solid electrolyte.

The foregoing lithium-ion solid electrolyte, sodium-ion solid electrolyte, and potassium-ion solid electrolyte may be any lithium-ion solid electrolyte, sodium-ion solid electrolyte, and potassium-ion solid electrolyte commonly used in the art.

In some embodiments, the solid electrolyte substrate is a lithium-ion solid electrolyte.

Examples of the lithium-ion solid electrolyte include, but are not limited to:
LISICON type, for example, γ-Li₃PO₄;
NASICON type, for example, Li₍₁₊ₓ₁₎QₓM₍₂₋ₓ₁₎(PO₄)₃, where 0 ≤ x1 < 1, and Q includes at least one of Al, Cr, Ba, Fe, Sc, In, Lu, Y, and La;
garnet type, for example, Li₍₇₋ₓ₂₎La₃Zr₍₂₋ₓ₂₎Mₓ₂O₁₂, where 0 ≤ x2 < 1, and M includes at least one of Sb, Nb, Ta, Te, and W;
LIPON type, for example, Liₓ₃PO_{y1}N_{z1}, where 0 < x3 ≤ 1, 0 < y 1 ≤ 1, 0 < z1 ≤ 1;
perovskite type, for example, Li3ₓ4Q_{(2/3-x4)}MO₃, where 0.04 < x4 < 0.17, Q includes at least one of La, Sr, Ba, or Nd, and M includes at least one of Al, Ti, and Ge;
anti-perovskite type, for example, Li₃OCl; thio-LiSICON type, for example, Li₍₃₊ₓ₅₎My₂A_{(1-y2)}Q_{(4-z2)}T_{z2}, where -1 < x5 < 2, 0 ≤ y2 ≤ 1, 0 ≤ z2 ≤ 2, M includes at least one of B, Al, In, Si, Ge, Sn, Ti, W, and Mo, A includes at least one of P, As, Sb, and Bi, Q includes at least one of S and Se, and T includes at least one of F, Cl, Br, and I; and
sulfide solid electrolytes, including: thiophosphate type: Li₃PS₄ and the like; argyrodite type: Li₆PS₅Cl; halide type: Li₃InCl₆; hydride type: at least one of 0.7Li(CB₉H₁₀)-0.3Li(CB₁₁H₁₂), for example, Li₍₁₀₊ₓ₆₎M_{(1+y3)}A_{(2-y3)}Q_{(12-z3)}H_{z3} type, where -2 < x6 < 2, 0 ≤ y3 ≤ 2, 0 ≤ z3 ≤ 2, M includes at least one of B, Al, In, Si, Ge, Sn, Ti, W, and Mo, A includes at least one of P, As, Sb, and Bi, Q includes at least one of S and Se, and H includes at least one of F, Cl, Br, and I; (100-x7)Li₂S•x7M•y4Q type, where 20 ≤ x7 ≤ 30, 0 ≤ y4 ≤ 50, M includes at least one of B₂S₃, Al₂S₃, In₂S₃, SiS₂, GeS₂, SnS₂, P₂S₅, As₂S₃, Sb₂S₅, Bi₂S₃, WS₂, and MoS₂, and Q includes at least one of B₂O₃, Al₂O₃, In₂O₃, SiO₂, GeO₂, SnO₂, P₂O₅, Sb₂O₅, Bi₂O₃, WO₂, WO₃, MoO₂, MoO₃, Fe₂O₃, ZnO, MgO, CuO, CaO, LiN, Li₂O, LiF, LiCl, LiBr, and LiI; argyrodite type: Li₍₆₊ₓ₈₎M_{y5}A_{(1-y5)}Q_{(5-z5)}T_{(1+z5)}, where -1 ≤ x8 ≤ 1, 0 ≤ y5 ≤ 1, -1 < z5 ≤ 1, M includes at least one of B, Al, In, Si, Ge, Sn, Ti, W, and Mo, A includes at least one of P, As, Sb, and Bi, Q includes at least one of S and Se, and T includes at least one of F, Cl, Br, and I; halide type: Li₃MJ or Li₂Sc_{2/3}J, where M includes at least one of Y, Er, In, Sc, and Ga, and J includes at least one of F, Cl, Br, and I.

When the foregoing sulfide solid electrolyte is a sulfide-type solid electrolyte, it includes, but is not limited to: argyrodite electrolytes; binary sulfide-type solid systems such as Li₂S-P₂S₅, Li₂S-SiS₂, Li₂S-GeS, and Li₂S-B₂S₃, and ternary systems such as Li₂S-Me-P₂S₅, where Me is selected from Si, Ge, Sn, Al, or the like.

Specifically, the foregoing sulfide electrolyte is selected from at least one of Li₂S-P₂S₅, Li₂S-SiS₂, Li₂S-GeS, Li₂S-B₂S₃, and Li₂S-Me-P₂S₅.

The sodium-ion solid electrolyte includes, but is not limited to: NASICON type: Na_{(1+x9+2y5)}Zr_{(2-y5)}M_{y5}P₍₃₋ₓ₉₎Siₓ₉O₁₂, where 0 ≤ x9 ≤ 3, 0 ≤ y5 ≤ 1, and M includes at least one of Zn, Mg, and Ca; Na-β-Alumina type: Na₂O · 2Al₂O₃ or Na₂O · 3Al₂O₃ and the like; Na₍₃₊ₓ₁₀₎M_{y6}A_{(1-y6)}Q_{(4-z6)}T_{z6} type, where -1 < x10 < 2, 0 ≤ y6 ≤ 1, 0 ≤ z6 ≤ 2, M includes at least one of B, Al, In, Si, Ge, Sn, Ti, W, and Mo, A includes at least one of P, As, Sb, and Bi, Q includes at least one of S and Se, and T includes at least one of F, Cl, Br, and I; Na₍₁₁₊ₓ₁₁₎M_{(2-y7)}A_{(1+y7)}Q_{(12-z7)}T_{z7} type, where -1 < x11 < 1, 0 ≤ y7 ≤ 2, 0 ≤ z7 ≤ 2, M includes at least one of B, Al, In, Si, Ge, Sn, Ti, W, and Mo, A includes at least one of P, As, Sb, and Bi, Q includes S or Se, and T includes at least one of F, Cl, Br, and I; anti-perovskite type Na₃OX, where X includes at least one of Cl, Br, I, and BH₄.

The potassium-ion solid electrolyte includes, but is not limited to: β-Alumina type such as K₂O · x13Al₂O₃, where x13 is any number from 8 to 11, Anti-Perovskite type such as K₃OI, and at least one of K₂Fe₄O₇ type and KSi₂P₃ type.

An embodiment of this application further provides a preparation method for a modified solid electrolyte, including the following steps S10 and S20.

Step S10. Mix a solid electrolyte substrate and a phase-transforming toughening agent to prepare a mixture.

Step S20: Subject the mixture to sintering treatment under a protective gas atmosphere to prepare a modified solid electrolyte.

In this preparation method, during sintering of the mixture, grains grow and grain boundaries fuse with each other. In addition, the phase-transforming toughening agent, which initially tends to be uniformly dispersed in the mixture, is driven by grain growth and the vast majority of the phase-transforming toughening agent enters the grain boundaries and becomes oriented along the grain boundaries.

Furthermore, due to grain growth and grain boundary fusion, defects and pores in the modified solid electrolyte are significantly reduced, and therefore the density is increased.

The types and more mass ratios of the solid electrolyte substrate and the phase-transforming toughening agent are as described above and will not be repeated herein.

In some embodiments, a temperature for the sintering treatment is 90°C to 600°C, and a duration is 10 minutes to 120 hours.

The temperature and duration of the sintering treatment are adjusted to further promote the movement of the vast majority of the phase-transforming toughening agent into the grain boundaries under the driving force of grain growth.

In some embodiments, a temperature for the sintering treatment is 90°C to 550°C.

The sintering temperature is further adjusted to ensure that the vast majority of the phase-transforming toughening agent enters the grain boundaries while maintaining the structural stability of the solid electrolyte substrate and the phase-transforming toughening agent.

Regarding "90°C-600°C", the temperature value includes the minimum and maximum values of this range, as well as every value between the minimum and maximum values. A specific example includes, but is not limited to, a point value in the embodiments and the following point values: 90°C, 100°C, 110°C, 120°C, 130°C, 140°C, 150°C, 160°C, 170°C, 180°C, 190°C, 200°C, 210°C, 220°C, 230°C, 240°C, 250°C, 260°C, 270°C, 280°C, 290°C, 300°C, 310°C, 320°C, 330°C, 340°C, 350°C, 360°C, 370°C, 380°C, 390°C, 400°C, 410°C, 420°C, 430°C, 440°C, 450°C, 460°C, 470°C, 480°C, 490°C, 500°C, 510°C, 520°C, 530°C, 540°C, 550°C, 560°C, 570°C, 580°C, 590°C, and 600°C; or a range defined by any two values, which, for example, may be 100°C-600°C, 100°C-550°C, 100°C-500°C, 100°C-450°C, 100°C-400°C, 100°C-350°C, 100°C-300°C, 100°C-250°C, 100°C-200°C, 150°C-600°C, 150°C-500°C, 150°C-400°C, 150°C-350°C, 150°C-300°C, 150°C-250°C, 150°C-200°C, 200°C-600°C, 200°C-500°C, 200°C-400°C, 200°C-350°C, 200°C-300°C, 200°C-250°C, 250°C-600°C, 250°C-500°C, 250°C-400°C, 250°C-350°C, 250°C-300°C, 300°C-600°C, 300°C-500°C, 300°C-400°C, 300°C-350°C, 400°C-600°C, 400°C-500°C, 450°C-600°C, 450°C-500°C, or 500°C-600°C.

Regarding "10 min-120 h", the time value includes the minimum and maximum values of this range, as well as every value between the minimum and maximum values. A specific example includes, but is not limited to, a point value in the embodiments and the following point values: 110 h, 100 h, 95 h, 90 h, 85 h, 80 h, 75 h, 70 h, 65 h, 60 h, 55 h, 50 h, 45 h, 40 h, 35 h, 30 h, 25 h, 20 h, 15 h, 10 h, 9 h, 8 h, 7 h, 6 h, 5 h, 4 h, 3 h, 2 h, 1 h, 0.5 h, 20 min, and 10 min.

In some embodiments, during sintering treatment in step S20: the temperature is raised to the sintering treatment temperature at a heating rate of 10°C/min for sintering.

It should be noted that the duration of the sintering treatment counts since the temperature reaches the sintering temperature.

In some embodiments, the protective gas atmosphere is formed by introducing a protective gas, where the protective gas includes at least one of an inert gas and nitrogen.

Optionally, the protective gas includes helium.

Optionally, a water content of the protective gas is < 0.1 ppm, and an oxygen content is < 0.1 ppm.

In some embodiments, after the sintering treatment, the method further includes a step of pressing a product obtained from the sintering treatment; where
optionally, pressure T1 used in the pressing step satisfies: T1 ≤ 400 MPa; or
optionally, T1 satisfies: 400 MPa ≤ T1 ≤ 600 MPa.

Through further pressing treatment, the component distribution of the modified solid electrolyte becomes more compact, and the phase-transforming toughening agent is further squeezed into the grain boundaries.

Further adjusting the pressing pressure can further increase the orientation degree A of the phase-transforming toughening agent along the grain boundaries.

In some embodiments, the mixing step in step S10 employs dry mixing, and before the subjecting the mixture to sintering treatment, the method further includes the following step:
pressing the mixture into a sheet-like mixture.

Optionally, a thickness of the sheet-like mixture is 200 µm to 2 mm.

In some embodiments, a pressure used for pressing the mixture into a sheet-like mixture is 400 MPa to 600 MPa.

In some embodiments, the mixing step in step S10 employs wet mixing, and before the subjecting the mixture to sintering treatment, the method further includes the following step:
applying and drying the mixture to form a film-like mixture; where optionally, a thickness of the film-like mixture is 10 µm to 200 µm.

It can be understood that dry mixing refers to directly mixing the solid electrolyte substrate and the phase-transforming toughening agent in solid form; while wet mixing refers to mixing the solid electrolyte substrate, the phase-transforming toughening agent, a solvent, and a binder to form a mixture slurry.

Optionally, the solvent may be at least one of water, small-molecule alcohol, a benzene-based solvent, and an alcohol-ether solvent. Further optionally, the small-molecule alcohol includes ethanol, propanol, and the like, and the benzene-based solvent includes toluene, xylene, and the like.

The binder may be a binder commonly used in the art, including but not limited to at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), carboxymethyl chitosan (CMCS), and polyvinylidene fluoride (PVDF).

Furthermore, mixing is performed through stirring. The stirring method may be any stirring method commonly used in the art, such as stirring with a ball mill. The stirring duration includes but is not limited to: 0.5 h to 6 h, and further, the stirring speed is 100 RPM to 300 RPM.

The drying step is intended to dry the solvent in the wet film formed by applying. There are no special requirements for the drying temperature or duration, as long as the solvent in the wet film formed by applying can be volatilized and dried. Specifically, drying methods commonly used in the art may be employed, including but not limited to vacuum drying, heat drying, and the like.

It should be noted that: after wet mixing, the solvent in the mixture volatilizes during the sintering treatment, and the binder carbonizes to form gas and volatilizes during the sintering treatment. Therefore, the residual content of solvent and binder in the modified solid electrolyte prepared after sintering is extremely low and can almost be disregarded.

An embodiment of this application provides a solid-state battery, where the solid-state battery includes the foregoing modified solid electrolyte.

In the foregoing modified solid electrolyte, the phase-transforming toughening agent is primarily dispersed along the grain boundaries of the modified solid electrolyte, and the grain boundaries are defect regions most susceptible to fracture when the solid electrolyte is subjected to external stress, as well as the regions where dendrites are most likely to grow and propagate. Therefore, this modified solid electrolyte can more precisely prevent the emergence of defects inside the solid electrolyte, enhance the toughness, suppress dendrites from further piercing the electrode, and provide high ionic conductivity, thereby improving the efficiency of the solid-state battery.

In some embodiments, in the foregoing solid-state battery, the modified solid electrolyte exists in the form of a membrane. Further, this solid-state battery includes a positive electrode plate and a negative electrode plate, with the modified solid electrolyte membrane disposed between the positive electrode plate and the negative electrode plate.

The positive electrode plate and the negative electrode plate may be any positive electrode plate and any negative electrode plate commonly used in the art. Non-limiting examples of the positive electrode plate and the negative electrode plate are provided herein.

### Negative electrode plate

The negative electrode plate includes a positive electrode current collector and a negative electrode active layer loaded on a surface of the positive electrode current collector.

Components of the negative electrode active layer include a negative electrode active material.

This negative electrode active material may be a negative electrode active material commonly used in this application, including at least one of a metallic lithium negative electrode material, a carbon-based negative electrode material, an oxide negative electrode material, and a silicon-based negative electrode material.

In any embodiment of this application, the foregoing negative electrode active material includes at least one of metallic lithium, a lithium-containing alloy, a lithium-containing composite, mesophase carbon microspheres, graphite, glassy carbon, carbon nanotubes, a carbon-carbon composite, carbon fibers, hard carbon, soft carbon, magnesium oxide, a silicon-carbon composite, TiO₂, MoO₂, In₂O₃, Al₂O₃, Cu₂O, VO₂, SnOₓ, SiOₓ, Ga₂O₃, Sb₂O₅, and Bi₂O.

In any embodiment of this application, a mass proportion of the foregoing negative electrode active material in the negative electrode active layer is 70% to 99.5%.

In any embodiment of this application, the components of the foregoing negative electrode active layer further include a negative electrode conductive agent and a negative electrode binder.

In any embodiment of this application, the negative electrode conductive agent may be a conductive material commonly used in the art, including but not limited to: at least one of graphite, carbon nanotubes, nanofibers, carbon black, and graphene. Specifically, it may be selected from at least one of SP, KS-6, acetylene black, branched Ketjen black ECP, SFG-6, vapor-grown carbon fiber VGCF, carbon nanotubes CNTs, graphene, and a composite conductive agent thereof.

Based on the total weight of the negative electrode active layer, a weight proportion of the negative electrode conductive agent in the negative electrode active layer is 0 wt% to 20 wt%.

The negative electrode binder may be a binder commonly used in the art, and may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), carboxymethyl chitosan (CMCS), and polyvinylidene fluoride (PVDF).

Based on the total weight of the negative electrode active layer, a weight proportion of the negative electrode binder in the negative electrode active layer is 0 to 30 wt%.

In any embodiment of this application, the negative electrode active layer optionally further includes other additives, such as thickeners, for example, sodium carboxymethyl cellulose (CMC-Na). Based on the total weight of the negative electrode active layer, a weight ratio of the other additives in the negative electrode active layer is 0 to 15 wt%.

In any embodiment of this application, the current collector in the negative electrode plate may be a metal foil or a composite current collector. For example, a copper foil may be used as the metal foil. The composite current collector may include a polymer material substrate and a metal layer formed on at least one surface of the polymer material substrate. The composite current collector may be formed by applying a metal material (aluminum, aluminum alloy, nickel, nickel alloy, titanium, titanium alloy, silver, silver alloy, or the like) on a polymer material substrate (for example, a substrate of polypropylene (PP), polyethylene terephthalate (PET), polybutylene terephthalate (PBT), polystyrene (PS), polyethylene (PE)).

In any embodiment of this application, the negative electrode plate may be prepared as follows: dispersing the components for preparing the negative electrode plate, such as the negative electrode active material, conductive agent, binder, and any other components, in a solvent (for example, deionized water) to form a negative electrode slurry; applying the negative electrode slurry onto a negative electrode current collector, and after drying, cold pressing, and other processes, obtaining the negative electrode plate. A solid content of the negative electrode slurry is 30 wt% to 70 wt%, with the viscosity at room temperature adjusted to 2000 mPa·s to 10000 mPa·s. The obtained negative electrode slurry is applied onto the negative electrode current collector. After drying and cold pressing, for example, rolling, the negative electrode plate is obtained. A coating density per unit area of the negative electrode powder is 75 mg/m² to 220 mg/m², and a compacted density of the negative electrode plate is 1.2 g/m³ to 2.0 g/m³.

### Positive electrode plate

The positive electrode plate includes a positive electrode current collector and a positive electrode active layer loaded on a surface of the positive electrode current collector.

Components of the positive electrode active layer include a positive electrode active material.

In some embodiments, a mass proportion of the positive electrode active material in the positive electrode active layer is 70% to 100%.

In some embodiments, the positive electrode active material may be a positive electrode active material known in the art for use in secondary batteries.

In any embodiment of this application, the positive electrode active material includes a sodium-ion positive electrode active material or a lithium-ion positive electrode active material.

Further, as an example, the lithium-ion active material may include at least one of the following materials: a lithium-containing phosphate with an olivine structure, a lithium transition metal oxide, and respective modified compounds thereof. However, this application is not limited to these materials, and other conventional positive electrode active materials for batteries may also be used. These positive electrode active materials may be used alone or in combination. Examples of lithium transition metal oxides may include, but are not limited to, at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.3}Co_{0.2}Mn_{0.3}O₂ (NCM523 for short), LiNi_{0.3}Co_{0.23}Mn_{0.23}O₂ (NCM211 for short), LiNi_{0.6}Co_{0.2}Mn_{0.2}O₂ (NCM622 for short), LiNi_{0.8}Co_{0.1}Mn_{0.1}O₂ (NCM811 for short)), lithium nickel cobalt aluminum oxide (for example, LiNi_{0.80}Co_{0.15}Al_{0.05}O₂), and modified compounds thereof. Examples of lithium-containing phosphates with an olivine structure may include, but are not limited to, at least one of lithium iron phosphate (for example, LiFePO₄ (LFP for short)), lithium manganese phosphate (for example, LiMnPO₄), and lithium iron manganese phosphate.

In any embodiment of this application, a molecular formula of the lithium-ion active material is LiFeₓMn₍₁₋ₓ₎PO₄, where x is 0 or 1.

It can be understood that: when x is 0, LiFeₓMn₍₁₋ₓ₎PO₄ is LiMnPO₄, namely, lithium manganese phosphate, and when x is 1, LiFeₓMn₍₁₋ₓ₎PO₄ is LiFePO₄, namely, lithium iron phosphate (LFP).

As an example, the sodium-ion positive electrode active material may include at least one of the following materials: a sodium transition metal oxide, a polyanionic compound, and a Prussian blue compound. However, this application is not limited to these materials, and other conventionally known positive electrode active materials for sodium-ion batteries may also be used. In any embodiment of this application, the positive electrode active material includes at least one of a sodium transition metal oxide, a polyanionic compound, and a Prussian blue compound.

Optionally, the positive electrode active material includes at least one of a sodium transition metal oxide and a polyanionic compound.

The sodium transition metal oxide has a layered transition metal structure. Compared to the rhombohedral phase of the Prussian blue compound, theoretically, the layered transition metal structure has a higher thickness rebound rate. However, in practical applications, the Prussian blue compound easily absorbs water to form crystal water and vacancy defects, leading to an increased thickness rebound rate and even structural collapse. Therefore, when a sodium transition metal oxide is used as the positive electrode active material, the thickness rebound rate of the positive electrode plate is lower instead.

Anionic structural units in the polyanionic compound are connected into a three-dimensional structure through covalent bonds, providing good structural stability. When used as the positive electrode active material, the positive electrode plate has a low thickness rebound rate.

As an optional technical solution of this application, in the sodium transition metal oxide, the transition metal includes at least one of Mn, Fe, Ni, Co, Cr, Cu, Ti, Zn, V, Zr, and Ce. For example, the sodium transition metal oxide is NaₓMO₂, where M includes at least one or more of Ti, V, Mn, Co, Ni, Fe, Cr, and Cu, and 0 < x ≤ 1.

As an optional technical solution of this application, the polyanionic compound may be a class of compounds having sodium ions, transition metal ions, and tetrahedral (YO₄)ⁿ⁻ anionic units. The transition metal includes at least one of Mn, Fe, Ni, Co, Cr, Cu, Ti, Zn, V, Zr, and Ce; Y includes at least one of P, S, and Si; and n represents the valence state of (YO₄)ⁿ⁻.

The polyanionic compound may alternatively be a class of compounds having sodium ions, transition metal ions, tetrahedral (YO₄)ⁿ⁻ anionic units, and halogen anions. The transition metal includes at least one of Mn, Fe, Ni, Co, Cr, Cu, Ti, Zn, V, Zr, and Ce; Y includes at least one of P, S, and Si; n represents the valence state of (YO₄)ⁿ⁻; and the halogen may be at least one of F, Cl, and Br.

The polyanionic compound may alternatively be a class of compounds having sodium ions, tetrahedral (YO₄)ⁿ⁻ anionic units, polyhedral units (ZO_{y})^{m+}, and optional halogen anions. Y includes at least one of P, S, and Si; n represents the valence state of (YO₄)ⁿ⁻; Z represents a transition metal, including at least one of Mn, Fe, Ni, Co, Cr, Cu, Ti, Zn, V, Zr, and Ce; m represents the valence state of (ZO_{y})^{m+}; and the halogen may be at least one of F, Cl, and Br.

For example, the polyanionic compound is at least one of NaFePO₄, Na₃V₂(PO₄)₃ (sodium vanadium phosphate, NVP for short), Na₄Fe₃(PO₄)₂(P₂O₇), NaM'PO₄F (where M' is one or more of V, Fe, Mn, and Ni), and Na₃(VO_{y})₂(PO₄)₂F_{3-2y} (where 0 ≤ y ≤ 1).

The Prussian blue compound may be a class of compounds having sodium ions, transition metal ions, and cyanide ions (CN⁻). The transition metal includes at least one of Mn, Fe, Ni, Co, Cr, Cu, Ti, Zn, V, Zr, and Ce. For example, the Prussian blue compound is NaₐMe_{b}Me'_{c}(CN)₆, where Me and Me' each independently include at least one of Ni, Cu, Fe, Mn, Co, and Zn, and 0 < a ≤ 2, 0 < b < 1, and 0 < c < 1.

In any embodiment of this application, the components of the positive electrode active layer further include a positive electrode binder, where a mass proportion of the positive electrode binder in the positive electrode active layer is 0.05% to 10%.

Optionally, the mass proportion of the positive electrode binder in the positive electrode active layer is 0.1% to 8%.

The positive electrode binder may be any binder commonly used in the art. As an example, the positive electrode binder includes at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, a fluorine-containing acrylate resin, sodium carboxymethyl cellulose, hydroxypropyl cellulose, sodium hydroxymethyl cellulose, potassium hydroxymethyl cellulose, diacetyl cellulose, polyacrylic acid, sodium alginate, styrene-butadiene rubber, acrylic butadiene rubber, polypyrrole, polyaniline, epoxy resin, and guar gum.

In any embodiment of this application, the components of the positive electrode active layer further include a positive electrode conductive agent, where a mass proportion of the positive electrode conductive agent in the positive electrode active layer is 0.05% to 8%.

Optionally, the mass proportion of the positive electrode conductive agent in the positive electrode active layer is 0.1% to 6%.

As an example, the positive electrode conductive agent may include at least one of superconducting carbon, acetylene black, carbon black, Ketjen black, carbon dots, carbon nanotubes, graphene, and carbon nanofiber.

The positive electrode current collector may be a metal foil or a composite current collector. For example, a copper foil may be used as the metal foil. The composite current collector may include a polymer material substrate and a metal layer formed on at least one surface of the polymer material substrate. The composite current collector may be formed by applying a metal material (copper, a copper alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), polyethylene (PE)).

In some embodiments, the positive electrode plate may be prepared as follows: dispersing the components for preparing the positive electrode plate, such as the positive electrode active material, positive electrode conductive agent, positive electrode binder, and any other components, in a solvent (for example, N-methylpyrrolidone) to form a positive electrode slurry; applying the positive electrode slurry onto a positive electrode current collector, and after drying, cold pressing, and other processes, obtaining the positive electrode plate.

In some embodiments, the foregoing solid-state battery is an all-solid-state battery or a semi-solid-state battery.

In some embodiments, in the solid-state battery, the foregoing modified solid electrolyte exists in the form of a modified solid electrolyte membrane, located between the positive electrode plate and the negative electrode plate.

Further, the foregoing solid-state battery further includes a housing for packaging the positive electrode plate, the negative electrode plate, and the modified solid electrolyte membrane.

In some embodiments, the housing may be a hard shell, for example, a hard plastic shell, an aluminum shell, or a steel shell. It may alternatively be a soft pack, for example, a soft pouch. The soft pack may be made of plastic, for example, polypropylene, polybutylene terephthalate, and polybutylene succinate.

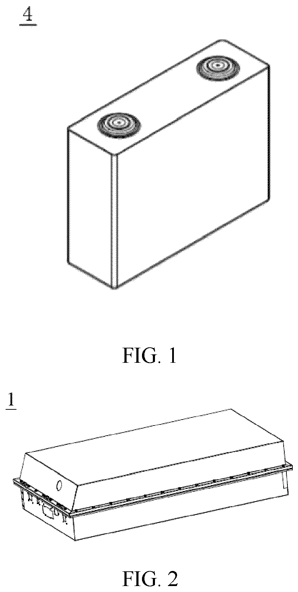

This application does not impose particular limitations on the shape of the battery, which may be cylindrical, square, or any other shape. For example, FIG. 1 shows a solid-state battery 4 with a square structure as an example.

This application further provides an electric apparatus, where the electric apparatus includes the foregoing solid-state battery.

Further, in this electric apparatus, the solid-state battery may exist in the form of a battery cell or may be further assembled into a battery pack.

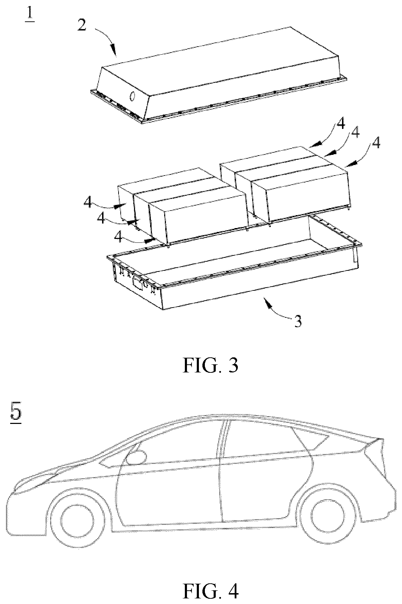

FIG. 2 and FIG. 3 show a battery pack 1 as an example. The battery pack 1 includes a battery box and one or more solid-state batteries 4 disposed within the battery box. The battery box includes an upper case 2 and a lower case 3, with the upper case 2 capable of covering the lower case 3 to form an enclosed space for the battery 4.

Multiple solid-state batteries 4 may be arranged in the battery box in any manner.

The solid-state battery or the battery pack assembled therefrom may be used as a power source for the electric apparatus or as an energy storage unit for the electric apparatus.

The electric apparatus may include, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf cart, or an electric truck), an electric train, a ship, a satellite, an energy storage system, or the like.

FIG. 4 shows an electric apparatus 5 as an example. The electric apparatus 5 is a battery electric vehicle, hybrid electric vehicle, plug-in hybrid electric vehicle, or the like. To meet the requirements of the electric apparatus 5 for batteries with high power and high energy density, a battery pack may be used.

As another example, the electric apparatus may be a mobile phone, a tablet computer, a notebook computer, or the like. Such devices typically require thinness and lightness, and a battery may be used as the power source.

This application is described below in conjunction with specific examples, but this application is not limited to the examples below. It should be understood that the appended claims outline the scope of this application, and under the guidance of the concepts of this application, those skilled in the art should recognize that certain modifications to the embodiments of this application will fall within the spirit and scope of the claims of this application.

The following are specific examples.

### Example 1

### 1. Preparation of modified solid electrolyte. The specific steps are as follows.

S1. Dry mixing of a solid electrolyte substrate (Li₆PS₅Cl) and a phase-transforming toughening agent was performed. A Fritsch Pulverisette planetary ball mill was used for mixing at a rotation speed of 100 RPM for 0.5 h to obtain a mixture.

The phase-transforming toughening agent included zirconium oxide and a stabilizer. Based on a mass of the phase-transforming toughening agent, a mass proportion of the stabilizer was denoted as Y1. Based on the total mass of the mixture, the mass proportion of the phase-transforming toughening agent was denoted as Y2. Specific parameters are shown in Table 1.

S2. The mixture was placed in a mold and pressed at 500 MPa into a disc-shaped mixture with a thickness of 1 mm and a surface area of 19.63 mm².

S3. The sheet-like mixture was placed in an argon atmosphere (H₂O < 0.1 ppm, O₂ < 0.1 ppm), the temperature was raised to 350°C at a rate of 10°C/min, and sintering was performed at this temperature for 10 h, followed by natural cooling to obtain the modified solid electrolyte.

S4. Performance testing was conducted on the modified solid electrolyte.

Testing of an orientation degree A of the phase-transforming toughening agent along the grain boundaries in the modified solid electrolyte:
1. A disc was cut out along a direction perpendicular to its thickness direction, with the cutting point at 1/2 of the disc's thickness, and the cutting cross-section formed during the cutting was used as the transverse cross-section to be tested.
2. The region of the transverse cross-section to be tested was divided into grids, forming 5 unit grid regions, and each grid region was observed under a scanning electron microscope to obtain scanning electron microscope images. The total number of signal points emitted by the key element in the scanning electron microscope image of each grid region was counted separately, regarded as the number of particles of the phase-transforming toughening agent in each grid region, and denoted as M11, M12, M13, M14, and M15. In addition, the number of signal points emitted by the key element at the grain boundaries in each grid region was counted, regarded as the number of particles of the phase-transforming toughening agent at the grain boundaries in each grid region, and denoted as M21, M22, M23, M24, and M25. The orientation degree of the phase-transforming toughening agent along the grain boundaries in the modified solid electrolyte for each grid region was calculated and denoted as A1, A2, A3, A4, and A5. The equations are as follows: $A 1 = M 21 / M 11 \times 100 % ;$ $A 2 = M 22 / M 12 \times 100 % ;$ $A 3 = M 23 / M 13 \times 100 % ;$ $A 4 = M 24 / M 14 \times 100 % ;$ and $A 5 = M 25 / M 15 \times 100 % .$

Then, the orientation degree A of the phase-transforming toughening agent along the grain boundaries in the modified solid electrolyte was calculated as follows: $A = \left(A1+A2+A3+A4+A5\right) / 5$ where the five-point sampling method was used for grid division to obtain five grid units. Specifically, the midpoint of the diagonals was first determined as the central sampling grid, and then four grid units equidistant from the central sampling grid were selected on the diagonals.

Specifically, each grid region was analyzed using scanning electron microscopy energy dispersive spectroscopy (SEM-EDS), the scanning electron microscope image was divided into 1 µm square grids, and the number of Zr element signal points output by EDS in each square grid was regarded as the number of particles of the phase-transforming toughening agent. Specific results are shown in Table 1. EDS scanning was performed at an acceleration voltage of 10 kV, and the EDS probe was Oxford Instrument AZtechOne.

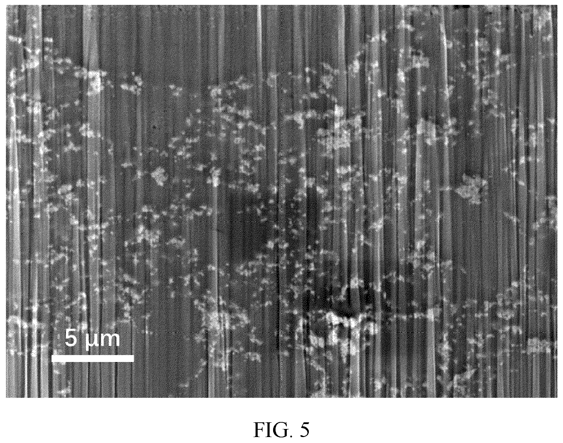

The scanning electron microscope image of the transverse cross-section to be tested of the modified solid electrolyte is shown in FIG. 5, from which it can be clearly seen that the phase-transforming toughening agent particles are primarily enriched and dispersed along the grain boundaries of the electrolyte.

Fracture toughness testing of the modified solid electrolyte:

Fracture toughness is a parameter describing a material's ability to absorb strain energy before fracturing. A higher fracture toughness value (K_{IC}) indicates a stronger ability to resist fracture propagation, and herein it also reflects the modified solid electrolyte's resistance to fracturing and short-circuiting caused by dendrites. Fracture toughness can be tested using methods such as the four-point bending test or Vickers conical indentation test. Herein, the Vickers conical indentation test was selected. The specific process was as follows.

In an argon atmosphere, the surface of the disc of the modified solid electrolyte was polished with sandpaper, sequentially from 800 grit, 2000 grit, 4000 grit, then to 8000 grit, until the disc surface exhibited mirror-like characteristics with no obvious defects. Then, a Vickers conical indentation tester was used to perform indentation testing on the polished surface. An appropriate load P was applied to drive the indentation tester until radial cracks appeared at the four corners of the conical indentation. Based on the indentation load P obtained during the test, the extension length C of the radial cracks, and the Vickers hardness H_{V}, the fracture toughness value K_{IC} was further calculated using the following formula: ${K}_{IC} = 0.016 {\left(\frac{E}{{H}_{V}}\right)}^{\frac{1}{2}} \left(\frac{P}{{C}^{\frac{3}{2}}}\right)$ where, P was the indentation load at which cracks appeared, in N; C was the extension length of the radial cracks, in mm; H_{V} was the Vickers hardness, in kgf/mm²; E was the Young's modulus, in GPa; and K_{IC} was the fracture toughness of the solid electrolyte, in MPa·m^{1/2}.

### (3) Critical current density testing of the modified solid electrolyte

Critical current density refers to the minimum current density at which dendrites and short circuits occur during electrochemical deposition when the solid electrolyte material is paired with the corresponding alkali metal electrode. In other words, when electrochemical deposition occurs below the critical current density, dendrites or short circuits do not occur in the modified solid electrolyte. Critical current density is a core indicator describing the ability of a solid electrolyte material to suppress dendrites and short circuits.

The critical current density of the modified solid electrolyte was measured using the traditional symmetrical battery step-wise increasing current density cycling method. Taking a lithium-ion solid electrolyte as an example, the process is as follows.

Two lithium metal discs, each with 8 mm long dendrites and a thickness of 50 µm, were placed symmetrically at the center positions on both sides of the disc of the modified solid electrolyte. Mechanical pressure was applied to ensure tight contact between the lithium metal discs and the electrolyte disc, forming a Li/solid electrolyte/Li symmetrical battery. After being assembled and encapsulated, the symmetrical battery was subjected to lithium deposition and stripping at an initial current of 0.25 mA/cm². After 1 mA/cm² of lithium deposition and stripping on one side, the current was increased to 0.5 mA/cm², with the areal capacity maintained at 1 mAh/cm² for deposition and stripping, and the current was sequentially increased to 0.75 mA/cm², 1.0 mA/cm², 1.25 mA/cm² till 10 mA/cm². The voltage changes were observed during this process. The current density at which the voltage suddenly dropped significantly was recorded as the critical current density (Jc). Specific results are shown in Table 1.

### (4) Ionic conductivity testing of the modified solid electrolyte

Ionic conductivity is a core indicator of the ability of a solid electrolyte to conduct corresponding metal ions. Ionic conductivity is generally tested using the electrochemical impedance spectroscopy method and calculated accordingly. The specific process was as follows:

A 200 nm-thick nickel metal layer was deposited on both sides of the disc of the foregoing solid electrolyte via magnetron sputtering PVD. Then, current collectors were attached to the nickel metal layers and connected to an electrochemical workstation via tabs. Electrochemical impedance testing was performed on the solid electrolyte disc at a bias voltage of 10 mV and a frequency range of 10⁶ Hz to 0.1 Hz. The Z' coordinate value of the point closest to the Z' axis in the low-frequency section of the electrochemical impedance spectrum curve, moving from right to left, was taken as the resistance R. The ionic conductivity was calculated using the formula below: $σ = \frac{1}{R} ⋅ \frac{d}{A}$ where d was the thickness of the solid electrolyte disc, and A was the area of contact between the solid electrolyte disc and the current collector.

### (5) Density testing of the modified solid electrolyte material. The specific process was as follows:

1. The mass of the solid electrolyte substrate (Li₆PS₅Cl) used in preparation was m1 with a theoretical density of ρ1, and the mass of the phase-transforming toughening agent was m2 with a theoretical density of ρ2. The theoretical volume Vt of the modified solid electrolyte was calculated according to the following formula: Vt = [m1/ρ1] + [m2/ρ2].
   Both m1 and m2 can be obtained by weighing with a balance. The solid electrolyte substrate and the phase-transforming toughening agent are commercially available products, and ρ1 and ρ2 are recorded in the parameter tables of the products.
2. The actual volume Vr of the modified solid electrolyte was measured using the Archimedes method or by measuring the actual modified solid electrolyte.
3. The density K of the modified solid electrolyte was K = Vt/Vr. Specific results are shown in Table 1.

S5. The solid-state battery was prepared and performance testing was conducted.

### (1) Preparation of positive electrode plate

A positive electrode active material NCM811, a binder nitrile rubber (NBR), a conductive agent VGCF, and an electrolyte Li₆PS₅Cl were mixed in a mass ratio of 80:1.5:0.5:18, p-xylene was added, and the mixture was stirred to prepare a uniformly dispersed slurry. The slurry was evenly applied on one side of an aluminum foil, then transferred to a vacuum drying oven for complete drying. The resulting electrode plate was rolled and then punched to obtain the positive electrode plate.

### (2) Preparation of negative electrode plate

Lithium metal was used as the negative electrode active material, and the preparation method of the negative electrode plate was as follows.

Lithium metal foil was rolled to a thickness of 50 µm, and through further rolling, the lithium metal foil was attached to one side of a copper foil surface, then cut to obtain the negative electrode plate.

The solid electrolyte membrane was placed between the negative electrode plate and the positive electrode plate, and they were bonded to ensure tight interfacial contact, forming a solid-state battery.

(3) Maximum charging current density testing: The maximum charging current density of the solid-state battery can be measured by a step-wise increasing current density cycling method until failure. After being assembled and encapsulated, the all-solid-state battery was charged and discharged initially at 0.25 mA/cm², with the capacity controlled at 1 mAh/cm², to ensure a constant areal capacity during the cycling test. After the first cycle was completed, the current was increased to 0.5 mA/cm², with the areal capacity maintained at 1 mAh/cm² for charge-discharge cycling, and then the current was increased in increments of 0.25 mA/cm² to 0.75 mA/cm², 1.0 mA/cm², 1.25 mA/cm², till 10 mA/cm² for full solid-state battery cycling. The current density at which the voltage suddenly dropped significantly or showed obvious jitter was recorded as the maximum charging current density.

Actually, the maximum charging current density has a physical meaning similar to the critical current density of the composite solid electrolyte, and their values are almost identical.

### Example 2

Example 2 is essentially the same as Example 1, with the only difference in the type of stabilizer used in step S1. Specific conditions are shown in Table 1.

Other steps and conditions are the same as in Example 1, and test results are shown in Table 1.

### Examples 3 to 6

Examples 3 to 6 are essentially the same as Example 1, with the only difference in the mass proportion Y2 of the phase-transforming toughening agent in the mixture used in step S1. Specific conditions are shown in Table 1.

Other steps and conditions are the same as in Example 1, and test results are shown in Table 1.

### Examples 7 to 13

Examples 7 to 13 are essentially the same as Example 1, with the only difference in the temperature or duration of the sintering treatment used in step S3. Specific conditions are shown in Table 1.

Other steps and conditions are the same as in Example 1, and test results are shown in Table 1.

### Examples 14 to 16

Examples 14 to 16 are essentially the same as Example 1, with the only difference in the mass proportion Y1 of the stabilizer in the phase-transforming toughening agent used in step S1. Specific conditions are shown in Table 1.

Other steps and conditions are the same as in Example 1, and test results are shown in Table 1.

### Comparative Example 1

Comparative Example 1 is essentially the same as Example 1, with the only difference being: the solid electrolyte substrate (Li₆PS₅Cl) was directly provided for step S4 and subsequent steps in Comparative Example 1.

### Comparative Example 2

Comparative Example 2 is essentially the same as Example 1, with the only difference being: in Comparative Example 2, step S3 was not performed. Specific conditions are shown in Table 1.

The remaining steps are the same as in Example 1.

The relevant physical parameters and test results of each example and comparative example are shown in Table 1, where, based on the mass of the phase-transforming toughening agent, the mass proportion of the stabilizer is denoted as Y1; based on the total mass of the modified solid electrolyte, the mass proportion of the phase-transforming toughening agent is denoted as Y2; the orientation degree of the phase-transforming toughening agent along the grain boundaries in the modified solid electrolyte is A; KIC, Jc, σ, and K are the fracture toughness, critical current density, ionic conductivity, and density of the modified solid electrolyte respectively.

**Table 1**

| | Modified solid electrolyte | | | | | | | | | | Solid-state battery |
|---|---|---|---|---|---|---|---|---|---|---|---|
| | Phase-transforming toughening agent | Y1 (%) | Y2 (%) | Sintering temperature (°C) | Sintering duration (min) | A (%) | K_{IC} (MPa·m^{1/2}) | Jc (mA/cm²) | Σ (mS/cm) | K (%) | Maximum charging current density (mA/cm²) |
| Example 1 | YSZ | 1.6 | 20 | 350°C | 600 | 90 | 2.27 | 4.25 | 2.098 | 88 | 4.25 |
| Example 2 | SSZ | 1.6 | 20 | 350°C | 600 | 90 | 1.95 | 4.0 | 2.112 | 89 | 4.0 |
| Example 3 | YSZ | 1.6 | 2 | 350°C | 600 | 98 | 0.47 | 1.5 | 2.647 | 87 | 1.5 |
| Example 4 | YSZ | 1.6 | 5 | 350°C | 600 | 95 | 0.89 | 2.0 | 2.728 | 86 | 2.0 |
| Example 5 | YSZ | 1.6 | 10 | 350°C | 600 | 93 | 1.72 | 2.75 | 2.344 | 88 | 2.75 |
| Example 6 | YSZ | 1.6 | 25 | 350°C | 600 | 87 | 2.53 | 4.25 | 1.834 | 89 | 4.25 |
| Example 7 | YSZ | 1.6 | 20 | 90°C | 600 | 50 | 0.68 | 2.35 | 1.694 | 80 | 2.35 |
| Example 8 | YSZ | 1.6 | 20 | 200°C | 600 | 72 | 0.78 | 2.50 | 1.831 | 81 | 2.50 |
| Example 9 | YSZ | 1.6 | 20 | 600°C | 600 | 97 | 3.12 | 0.25 | 0.037 | 92 | 0.25 |
| Example 10 | YSZ | 1.6 | 20 | 350°C | 10 | 64 | 0.84 | 2.50 | 1.765 | 81 | 2.50 |
| Example 11 | YSZ | 1.6 | 20 | 350°C | 300 | 90 | 2.01 | 3.50 | 1.845 | 86 | 3.50 |
| Example 12 | YSZ | 1.6 | 20 | 350°C | 3000 | 95 | 2.31 | 4.25 | 2.237 | 90 | 4.25 |
| Example 13 | YSZ | 1.6 | 20 | 350°C | 7200 | 98 | 2.34 | 4.25 | 2.341 | 90 | 4.25 |
| Example 14 | YSZ | 0.01 | 20 | 350°C | 600 | 90 | 1.25 | 2.25 | 2.121 | 88 | 2.25 |
| Example 15 | YSZ | 10 | 20 | 350°C | 600 | 90 | 1.93 | 2.75 | 2.089 | 89 | 2.75 |
| Example 16 | YSZ | 50 | 20 | 350°C | 600 | 90 | 1.27 | 2.25 | 1.987 | 88 | 2.25 |
| Comparative Example 1 | / | / | / | / | / | / | 0.21 | 1.25 | 2.616 | 78 | 1.25 |
| Comparative Example 2 | YSZ | 1.6 | 20 | / | / | 23 | 0.66 | 2.25 | 1.623 | 80 | 2.25 |

| | | | | | | | | | | | |
|---|---|---|---|---|---|---|---|---|---|---|---|
| Note: "/" indicates the absence of that step, substance, or parameter. | | | | | | | | | | | |

From the test results in the foregoing table, through analysis and comparison of the data of Example 1 and Comparative Examples 1 and 2, it can be seen that in the modified solid electrolyte of this application, the phase-transforming toughening agent is primarily dispersed along the grain boundaries of the modified solid electrolyte. Grain boundaries are the defect regions most susceptible to fracture when the solid electrolyte is subjected to external stress, as well as the regions where dendrites are most likely to grow and propagate. Therefore, that the phase-transforming toughening agent is primarily dispersed along the grain boundaries of the modified solid electrolyte can more precisely prevent the emergence of defects inside the solid electrolyte, further improving the toughness.

The technical features of the foregoing embodiments can be combined arbitrarily. To keep the description concise, not all possible combinations of the technical features in the foregoing embodiments are described. However, as long as there is no contradiction in these combinations of technical features, they should be considered within the scope of this specification.

The foregoing embodiments only express several implementations of this application, with relatively specific and detailed descriptions, but they should not be construed as limiting the scope of the patent application. It should be noted that for those of ordinary skill in the art, several variations and improvements can be made without departing from the concept of this application, all of which fall within the protection scope of this application. Therefore, the protection scope of this patent application should be subject to the appended claims, and the specification and drawings can be used to interpret the content of the claims.

## Claims

1. A modified solid electrolyte, wherein components of the modified solid electrolyte comprise a solid electrolyte substrate and a phase-transforming toughening agent dispersed within the solid electrolyte substrate, and in the modified solid electrolyte, the phase-transforming toughening agent is primarily dispersed at grain boundaries of the solid electrolyte; wherein
the phase-transforming toughening agent is capable of phase transformation under the action of an external force.

2. The modified solid electrolyte according to claim 1, wherein among the total number of particles of the phase-transforming toughening agent in the modified solid electrolyte, a proportion of particles of the phase-transforming toughening agent dispersed at the grain boundaries of the solid electrolyte is ≥ 50%.

3. The modified solid electrolyte according to claim 1, wherein in a cross-section of the modified solid electrolyte, the total number of particles of the phase-transforming toughening agent is N1, the number of particles of the phase-transforming toughening agent dispersed at the grain boundaries within the cross-section is N2, and then an orientation degree A of the phase-transforming toughening agent along the grain boundaries is A = N2/N1 × 100%, wherein A satisfies: A ≥ 50%;
optionally, A satisfies: 50% < A ≤ 100%; or
optionally, A satisfies: 50% < A < 100%.

4. The modified solid electrolyte according to claim 3, wherein the cross-section is a transverse cross-section or a longitudinal cross-section of the modified solid electrolyte.

5. The modified solid electrolyte according to claim 3, wherein steps for testing the orientation degree A comprise:
taking a test sample of the modified solid electrolyte, and cutting the test sample along a direction perpendicular to a thickness direction of the test sample, wherein a cutting cross-section formed by cutting the test sample is a transverse cross-section to be tested;
using an X-ray energy dispersive spectrometer to identify a key element contained in the phase-transforming toughening agent in the transverse cross-section to be tested so as to cause the key element to emit signal points, and obtaining a scanning electron microscope image of the transverse cross-section to be tested;
obtaining the total number M1 of signal points in the scanning electron microscope image and the number M2 of signal points contained at the grain boundaries in the scanning electron microscope image; and
calculating A based on M1 and M2; wherein
the key element is an element contained in the phase-transforming toughening agent but not contained in the solid electrolyte substrate.

6. The modified solid electrolyte according to claim 5, wherein the phase-transforming toughening agent contains zirconium oxide, and the key element is zirconium.

7. The modified solid electrolyte according to claim 6, wherein the phase-transforming toughening agent further contains a stabilizer, and in the phase-transforming toughening agent, a mass proportion of the stabilizer is 0.01% to 50%;
optionally, the stabilizer contains at least one element of yttrium, scandium, magnesium, calcium, and cesium;
optionally, the stabilizer comprises at least one of yttrium oxide, scandium oxide, magnesium oxide, calcium oxide, and cesium oxide; or
optionally, the stabilizer comprises yttrium oxide.

8. The modified solid electrolyte according to any one of claims 1 to 7, wherein, in the modified solid electrolyte, a mass proportion of the phase-transforming toughening agent is 2% to 25%;
optionally, the mass proportion of the phase-transforming toughening agent is 5% to 25%;
optionally, the mass proportion of the phase-transforming toughening agent is 10% to 25%; or
optionally, the mass proportion of the phase-transforming toughening agent is 15% to 25%.

9. The modified solid electrolyte according to any one of claims 1 to 8, wherein, in the modified solid electrolyte, mass of the solid electrolyte substrate is ml with a theoretical density of ρ1, mass of the phase-transforming toughening agent is m2 with a theoretical density of ρ2, and then a theoretical volume Vt of the modified solid electrolyte satisfies: Vt = [m1/ρ1] + [m2/ρ2]; and
an actual volume of the modified solid electrolyte is Vr, and then density K of the modified solid electrolyte is K = Vt/Vr × 100%; wherein
optionally, K satisfies: K ≥ 70%; or optionally, K satisfies: 90% ≤ K ≤ 100%.

10. The modified solid electrolyte according to any one of claims 1 to 9, wherein the solid electrolyte substrate comprises any one of a lithium-ion solid electrolyte, a sodium-ion solid electrolyte, and a potassium-ion solid electrolyte.

11. A preparation method for a modified solid electrolyte, comprising the following steps:
mixing a solid electrolyte substrate and a phase-transforming toughening agent to prepare a mixture; and
subjecting the mixture to sintering treatment under a protective gas atmosphere to prepare the modified solid electrolyte.

12. The preparation method for a modified solid electrolyte according to claim 11, wherein the sintering treatment satisfies at least one of the following conditions (1) and (2):
(1) a temperature for the sintering treatment is 90°C to 600°C, and a duration is 10 min to 120 h; and
(2) the protective gas atmosphere is formed by introducing a protective gas, wherein the protective gas comprises at least one of an inert gas and nitrogen;
optionally, the protective gas comprises helium; or
optionally, a water content of the protective gas is < 0.1 ppm, and an oxygen content is < 0.1 ppm.

13. The preparation method for a modified solid electrolyte according to claim 11 or 12, wherein after the sintering treatment, the method further comprises a step of pressing a product obtained from the sintering treatment; wherein
optionally, pressure T1 used in the pressing step satisfies: T1 ≥ 400 MPa; or
optionally, T1 satisfies: 400 MPa ≤ T1 ≤ 600 MPa.

14. The preparation method for a modified solid electrolyte according to claim 11 or 12, wherein the mixing step employs dry mixing, and before the subjecting the mixture to sintering treatment, the method further comprises the following step:
pressing the mixture into a sheet-like mixture; wherein optionally, a thickness of the sheet-like mixture is 200 µm to 2 mm; and optionally, a pressure used for pressing the mixture into a sheet-like mixture is 400 to 600 MPa; or
the mixing step employs wet mixing, and before the subjecting the mixture to sintering treatment, the method further comprises the following step:
applying and drying the mixture to form a film-like mixture; wherein optionally, a thickness of the film-like mixture is 10 µm to 200 µm.

15. A solid-state battery, wherein the solid-state battery comprises the modified solid electrolyte according to any one of claims 1 to 10 or a modified solid electrolyte prepared using the preparation method according to any one of claims 11 to 14.

16. An electric apparatus, wherein the electric apparatus comprises the solid-state battery according to claim 15.
